# EUROPEAN PATENT APPLICATION

(11) **EP 2 487 584 A2**
(43) Date of publication of application: **15.08.2012**
(21) Application number: 12154756.6
(22) Date of filing: 09.02.2012
(51) Int. Cl.: G06F 9/44, H04M 1/725

(54) **Operation method for memo function and portable terminal supporting the same**

(30) Priority: 11.02.2011 US 201161463115 P; 20.06.2011 KR 20110059499
(71) Applicant: Samsung Electronics Co., Ltd, Gyeonggi-do (KR)
(72) Inventor: Kim, Hyun Kyoung, Gyeonggi-do (KR); Jeon, Jin Young, Gyeonggi-do (KR); Park, Hyun Mi, Gyeonggi-do (KR); Kim, Tae Yeon, Gyeonggi-do (KR); Song, Min Seung, Gyeonggi-do (KR)
(74) Representative: Jenkins, Richard Gavin

(57) **Abstract**

A method for providing a memo function and a portable terminal supporting the same are provided. The portable terminal includes: a memory for storing at least one user function; a display unit for outputting screen information according to an activation of the at least one user function; an input unit for generating an input signal corresponding to a function call for creating a memo in a state that a screen according to the activation of the user function is output; and a controller performing a control operation to tag activation information of the user function including at least one of screen information, audio information, or user function information that is output according to the activation of the user function to the created memo and to store a tagged memo as a tagging memo.

## Description

### CROSS REFERENCE TO RELATED APPLICATION

This application claims the benefit of U.S. Provisional Application Serial No. 61/463,115 filed February 11, 2011, the teachings of which are incorporated herein by reference.

### BACKGROUND OF THE INVENTION

### 1. Field of the Invention

The present invention relates to a portable terminal, and more particularly, to an operation method of providing a memo function by tagging activation information to a memo for a later replay for storage.

### 2. Description of the Related Art

A portable terminal has been used in a variety of fields due to easy portability and convenience thereof. The portable terminal is provided with various input schemes, and a popular is a touch screen including a touch panel and a display unit. A user typically selects a certain image output on the display unit via the touch panel for operation, and controls an application program corresponding to a user function based on the generated touch event.

For example, a portable terminal user is provided with a memo function to store desired information. The conventional memo function provides only of the function of wiring and storing text information. However, when retrieving the information stored using a memo function, it is difficult to access the stored contents in an intuitive or organized way. That is, as the created memos are collectively stored without any means to classify, thus making difficult for a subsequent retrieval mode. Accordingly, the memo function has not been readily used by many users.

Therefore, there is a need for improved ways to classify and manage stored information entered via a memo function for a subsequent retrieval.

### SUMMARY OF THE INVENTION

The present invention has been made in view of the above problems, and provides an operation method of providing a memo function that can store the user function activation information of a portable terminal when creating and storing a memo to enable the user to retrieve the stored memo. This is achieved by tagging the memo including various information to provide means to easily review and check the previously stored memos.

In accordance with an aspect of the present invention, an operation method of providing a memo function in a portable terminal includes: activating at least one user function supported from the portable terminal; creating a memo in a state that at least one user function is activated; and tagging activation information corresponding the user function which includes at least one of screen information, audio information, and other user function relation information that is output during an activation of the user function to the created memo for storage.

In accordance with another aspect of the present invention, a portable terminal supporting a memo function includes: a memory for storing at least one user function; a display unit for outputting screen information according to an activation of at least one user function; an input unit for generating an input signal for creating a memo according to the activation of the user function; and a controller performing a control operation to tag activation information corresponding the user function which includes at least one of screen information, audio information, and other user function information that is output according to the activation of the user function to the created memo and then storing the tagged memo as a tagging memo.

An operation method for a memo function and a portable terminal supporting the same according to an embodiment of the present invention may store a memo including various information, thus enabling the user to easily check and analogize contents of the memo by searching the stored tagged memo during a retrieval process.

### BRIEF DESCRIPTION OF THE DRAWINGS

The above features and advantages of the present invention will be more apparent from the following detailed description in conjunction with the accompanying drawings, in which:
FIG. 1 is a block diagram schematically illustrating a configuration of a portable terminal according to an exemplary embodiment of the present invention;
FIG. 2 is a block diagram illustrating a detailed configuration of a controller shown in FIG. 1;
FIG. 3 is a flowchart illustrating a process of creating and storing a memo during a memo function according to an exemplary embodiment of the present invention;
FIG. 4 is a flowchart illustrating a process of searching a memo during a memo function according to an exemplary embodiment of the present invention;
FIG. 5 is a view illustrating an example of a screen for describing creation of a memo based on a photograph searching function during a memo function according to an exemplary embodiment of the present invention;
FIG. 6 is a view illustrating another example of a screen for describing creation of a memo based on a photograph searching function during a memo function according to an exemplary embodiment of the present invention;
FIG. 7 is a view illustrating an example of a screen for describing creation of a memo based on a moving image playback function during a memo function according to an exemplary embodiment of the present invention;
FIG. 8 is a view illustrating another example of a screen for describing searching a created memo based on a moving image playback function during a memo function according to an exemplary embodiment of the present invention;
FIG. 9 is a view illustrating a screen interface for supporting a tagged memo search function according to an exemplary embodiment of the present invention;
FIG. 10 is a view illustrating an example of a screen for describing creation of a memo based on a call function during a memo function according to an exemplary embodiment of the present invention; and
FIG. 11 is a view illustrating another example of a screen for describing search of a created memo based on a call function during a memo function according to an exemplary embodiment of the present invention.

### DETAILED DESCRIPTION

Hereinafter, exemplary embodiments of the present invention are described with reference to the accompanying drawings in detail. The same reference numbers are used throughout the drawings to refer to the same or like parts. For the purposes of clarity and simplicity, detailed descriptions of well-known functions and structures incorporated herein may be omitted to avoid obscuring the subject matter of the present invention.

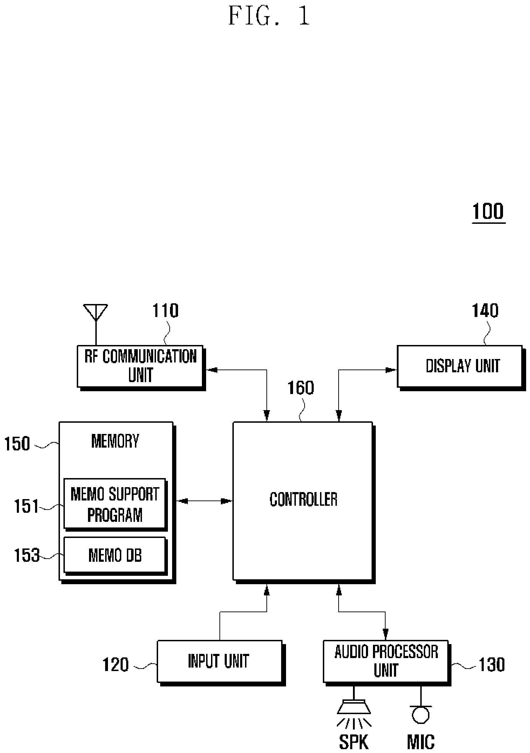

FIG. 1 is a block diagram schematically illustrating a configuration of a portable terminal according to an exemplary embodiment of the present invention.

Referring to FIG. 1, a portable terminal 100 of the present invention may includes a radio frequency (RF) communication unit 110, an input unit 120, an audio processor 130, a display unit 140, a memory 150, and a controller 160. The portable terminal 100 of the present invention may support a tagged memo function. As explained later in the specification, the tagged memo function according to the present invention automatically provides a tagging of specific activation information to a currently displayed image or video, or audio content to a memo that is being created, so that the corresponding activation information is stored with the memo content and later retrieved using readily identifiable activation information by a user.

That is, when a memo is created, the portable terminal of the present invention having a construction as illustrated in FIG. 1 operates to tag activation information (such as a date, a title, an event, a specific image frame(s), a specific time, a location of image, a specific information of image content, a phone number, a web page information, etc. that serves to identify a particular time or event when the memo was being created) corresponding to a currently activated user function to a memo and stores the memo along with the tagged activation information. That is, "activation information" refers to any information that enables the user to identify a particular image at the time when the memo is created. Such activation information is later used to retrieve one of previously created and stored memo during a replay by a user. Thus, the portable terminal 100 of the present invention provides tagged activation information corresponding to the the memo as a link so that a user can retrieve a particular stored memo at later time. Accordingly, a terminal user may construct a database containing a number of memos to which an unique tag information (i.e. activation information) is provided for identification purposes.

As a result, the terminal user may search the memo database to determinethe activation information at the time of creation of the memo, thereby exactly understanding the exact contents of the memo during a replay.

The RF communication unit 110 forms a first communication channel for a call connection, a second communication channel for a video call connection, and a third communication channel for transmitting data such as images or messages under the control of the controller 160. That is, the RF unit 110 establishes an audio call channel, a data communication channel, and a video call channel between mobile communication systems. To this end, the RF communication unit 110 may include an RF transmitter up-converting a frequency of a transmitted signal and amplifying the signal, and an RF receiver low-noise-amplifying a received signal and down-converting the signal.

In particular, the RF communication unit 110 of the present invention may be operated in conjunction with a memo function. That is, the portable terminal 100 may form a communication channel with another portable terminal using the RF communication unit 110. In this state, the portable terminal 100 may activate a memo function according to a user request. In this case, the portable terminal 100 may tag information of the RF communication unit 100 to a corresponding memo as activation information for identification purposes, and then store the memo.

In the embodiment, the activation information of the RF communication unit 110 may further be information regarding another portable terminal during a call connection, and more specifically it may be a phone number of another portable terminal, or a particular phone-book information stored in a phone-book of the portable terminal 100. Accordingly, the user may easily check the called party at the time of creation of the memo via the activation information tagged thereto. Thereafter, the user may operate an automatic phone dialing function with a tagged phone number of another portable terminal retrieved from the memo database.

The activation information of the RF communication unit 110 includes phone-book information, and may also include a schedule image if the user performs a video phone call. Thus, the activation information of the RF communication unit 110 may be tagged to a memo to which at least one frame is created among the video phone images. Screen information, such as an image frame, date or title input by the user, tagged to the memo for storage, then retrieved for during a subsequent replay. Further, the screen information may include a plurality of video phone call frames divided for each period from activation of the memo function to storage thereof.

The RF communication unit 110 may further provide a web access function according to a user request. To this end, the RF communication unit may form a data communication channel with a specific server in response to the user's request. Thus, the activation information of the RF communication unit 110 may also include a specific web page information output on the display unit 140 when the memo function is activated, a terminated time point of memo storage, or a switched time point of a web page of web pages received from a servicer, etc. Further, the RF communication unit 110 may receive a predetermined moving image in a streaming scheme based on access of a server. In this case, the activation information of the RF communication unit 110 may become a partiuclar moving image clip received via a streaming scheme when the memo function is activated, a storing time point of a memo, or a predetermined time from the activation time when the memo is stored while watching a moving image.

The input unit 120 includes a plurality of input keys and function keys for receiving input of numeral or character information and setting various types of functions. The function keys may include arrow keys, side keys, and hot keys set to perform certain functions. The input unit 120 creates and transfers a key input associated with user setting and function control of a portable terminal 100 to the controller 160. The input unit 120 may be implemented by a Qwerty keypad, a 3*4 keypad, or a 4*3 keypad including a plurality of keys. The input unit 120 may be implemented by a Qwerty key map, a 3*4 key map, or a 4*3 key map output on the display unit 140. When the display unit 140 of the portable terminal 100 is supported in the form of a full screen, the input unit 120 may include only a side key formed at the side of the portable terminal 100. In particular, the input unit 120 of the present invention may creates an input signal for activating a memo function at the time of activating a certain user function, an input signal for creating a memo during activating a memo function, an input signal for searching a tagged memo to which activation information of the user function is tagged, and an input signal for checking the tagged memo according to an embodiment of the present invention. The created input signals are transferred to the controller 160 to support performing a function operation according to the input signals.

The audio processor 130 includes a speaker SPK for outputting audio data transmitted and received, audio data included in a received message, and audio data according to the playback of an audio file stored in the memory 150 during a call connection, and a microphone MIC for collecting a voice of the user or other audio signals during the call connection. The audio processor 130 may activate the microphone MIC when activating a memo function, and collects audio signals while creating a memo. The collected audio signal may be tagged to a corresponding memo and stored therein. In this case, the audio signal may become an audio signal collected while activating the memo function. For example, when the portable terminal 100 receives and output an audio signal from an exterior as during a call connection or during watching broadcasting of a program, a corresponding audio signal may be stored in a memo as tagging information while activating the memo function.

The display unit 140 includes a display panel and a display panel. The display unit 140 may have a structure in which a touch panel is arranged at a front surface of the display panel.

The display panel displays information input by the user or information provided to the user as well as various menus of a portable terminal 100. That is, the display panel may provide various screens according to use of the portable terminal 100, for example, an idle screen, a menu screen, a message creating screen, and a call screen. The display panel may be configured by a Liquid Crystal Display (LCD) or an Organic Light Emitted Diode (OLED). The display panel may be disposed at an upper part or a lower part of the touch panel.

In particular, a display panel of the display panel may output a menu or an icon for activating a memo function at a predetermined region in a state that an activation screen of a user function is output. The icon may be activated by a certain side key. When a corresponding icon is activated, the display panel may output a memo creator for operating a memo function in a state that a screen associated with at least one user function is output. The memo creator is a tool for creating a memo, and may include tools capable of inputting text input, line, or image. The user may input predetermined text information or a straight line, a curve, or a color to write a predetermined picture or an informal map using a memo creator. In this case, the memo creator may output an activation screen of a user function on a display panel. Accordingly, the memo creator may be overlaid and output on the activation screen of a user function or receive allotment of a predetermined region to be output. When the memo creator receives allotment of a predetermined region to be output, the activation screen of a user function may be resized and rearranged at a predetermined region of the display panel. Because the memo creator has transparency and is overlaid and output on the activation screen of a user function, a user may check the activation screen of a user function output at a lower part of the memo creator to create a memo. Meanwhile, the display panel may output various user function screens to support a tagged memo function of the present invention. For example, the display panel may output user function relation screens such as a screen during a call, a web page screen, a document screen, a game screen, a moving image screen, or a calendar screen provided from the portable terminal 100. Respective screens or information associated with the screens may be tagged to a corresponding memo as tagging information at the time of operating the memo function.

The touch panel is disposed in at least one of an upper part or a lower part of the display panel, and may create a touch event according to a finger contact by the user, and transfer the created touch event to a controller 160. In this case, a sensor configuring a touch panel is arranged in the form of a matrix. Corresponding location information with respect to a touch event occurring on the touch panel, and information about a type of a touch event are transferred to the controller 160.

In particular, when a memo function is activated in a state that an activation screen of a user function is output, the touch panel may set a region for supporting a touch function for the memo creator. That is, when an icon for activating the memo function is output, the touch panel of the present invention supports region setting for a corresponding icon touch. Further, the touch panel supports region setting for an icon for text input, an icon for image input, and an icon for image input in a memo creator. The touch panel may create a touch event necessary for creation of a memo according to a user touch and transfer the created touch event to the controller 160. Further, the touch panel may set a touch region for an icon for storing a memo and a memo icon for searching the memo.

The memory 150 may store a key map or a menu map for an operation of the display unit 140 as well as an application program necessary for a function operation according to an embodiment of the present invention. In this case, the key map and the menu may become various forms. That is, the key map may become a keyboard map, a 3*4 key map, a Qwerty key map, or a control key map for controlling an operation of a currently activated application program. Moreover, the menu map may become a menu map for controlling an operation of the currently activated application program. The memory 150 may chiefly a program area and a data area.

The program area may store an operating system (OS) for booting the portable terminal 100 and for an operation of the foregoing constructions, and application programs for supporting various user functions of the portable terminal 100, for example, an application program for playing various files, an application program for supporting a call function of the portable terminal 100, a web browser for accessing an Internet server, an MP application program for playing other sound sources, an image output application program for searching photographs, and a moving image playback application program. In particular, the program area of the present invention may stores a memo support program 151.

The memo support program 151 is a program for supporting a tagged memo function of the present invention. The memo support program 151 includes a memo creator output routine, a memo creation support routine, a routine collecting activation information of an activated user function at the time of storing a memo, a routine linking collected activation information of a user function to a memo and storing the memo, and a routine searching and supporting a stored tagged memo. The tagged memo search supporting routine may include a created memo output routine, a routine outputting link information associated with activation information of a user function tagged to the memo, a routine outputting the activation information of the user function tagged to the memo together with the memo, and a routine automatically activating a user function included in the memo when link information is selected or certain input signal is generated.

The tagging method only has a captured image from the display unit and stored captured image with a created memo.

The data area is an area for storing data generated according to operations of the portable terminal 100, and may store phone-book data, and at least one icon and various contents according to a widget function. Further, the data area may store a user input provided through the touch panel. In particular, the data area includes a memo DB 153. The memo DB 153 may store the foregoing tagged memos. The tagged memo may be information including the memo and activation information associated with at least user function activated when creating and storing the memo. In this case, the activation information of a user function may contain a title of the user function, screen or audio signal information according to an activation of the user function when creating or storing the memo, link information with respect to activation and collecting time point of the user function, and memo storage time information. The link information may be updated according to variations in the user function. For example, if a corresponding moving image is deleted after a certain moving image is stored with a memo as activation information of the user function, the link information may be switched to text information without a link function. The text information may be information such as "deleted information" or "deleted file name" etc. and the link information cannot provide a link function to the moving image since the moving image has been deleted.

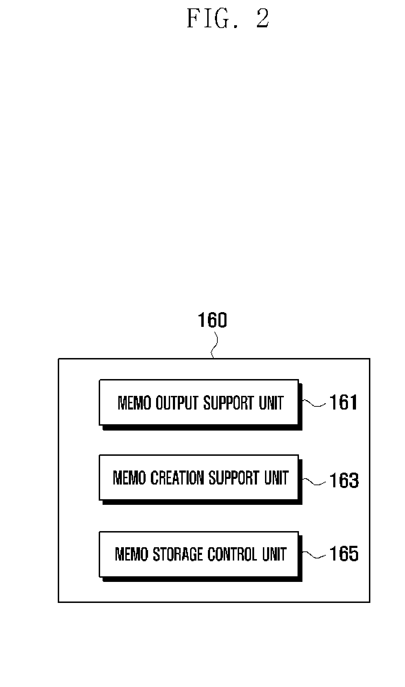

The controller 160 may perform a control operation to supply power to respective constructions of the portable terminal 100, thereby performing an initializing procedure. Further, the controller 160 may control various signal flows necessary for activating a tagged memo function of the portable terminal 100. To do this, the controller 160 may a configuration as illustrated in FIG. 2.

FIG. 2 is a block diagram illustrating a detailed configuration of a controller shown in FIG. 1.

Referring to FIG. 2, a controller 160 of the present invention may include a memo output support unit 161, a memo creation support unit 163, and a memo storage control unit 165.

In operation, the memo output support unit 161 supports searching of a tagged memo. When the user creates and stores the tagged memo in the memory 150, the memo output support unit 161 controls the display unit 140 to output the tagged memos stored in the memory 150 according to a user request. For example, the memo output support unit 161 may perform a control operation to output the stored tagged memos on the display unit 140 in the form of a list or a thumb nail. In this case, the memo output support unit 161 may perform a control operation to give a higher priority to recently created tagged memos to output it at an upper end of a list or as a first item. Further, the memo output support unit 161 may perform a control operation to output a tagged memo having a high priority according to the user setting upon creation of the memo at a region of a display unit 140 so that a user can easily recognize.

If a certain tagged memo is selected, the memo output support unit 161 may perform a control operation to output a screen including only stored contents of a memo on the display unit 140. In this case, a corresponding memo may be displayed on an entire surface of the display unit 140. Here, the memo output support unit 161 may output link information displaying activation information of a user function tagged to a predetermined region of a memo output on the entire surface of the display unit 140 along with the memo. The memo output support unit 161 in turn may control the display unit 140 to simultaneously output the memo and the activation information of the user function, which was stored at the time of storing the memo, according to user setting or request.

In the meantime, when a certain user function is activated, the memo output support unit 161 may support to output tagged memos stored associated with a corresponding user function on a portion of the screen in the form of a certain icon. Accordingly, when a certain user function is activated, the user may recognize that there is a memo previously created and stored by the user, and can check contents of the memo through the selection of a corresponding icon. Further, the memo output support unit 161 may control the user function to output a screen corresponding to the activation information of the user function on a screen upon creating or storing the memo.

The memo creation support unit 163 supports a creation of the memo. To this end, the memo creation support unit 163 may support to output an icon or a menu item for calling a memo creator on an idle screen or an activation screen of the user function. Further, the memo creation support unit 163 may allot a certain key as a hot key for directly triggering the memo creator. If a corresponding key is activated or an icon is selected, the memo creation support unit 163 supports to output the memo creator on the display unit 140. Here, the memo creation support unit 163 may perform a control operation to resize and output a previously output activation screen of the user function when a memo creation is output while activating the user function at a predetermined region of a screen, and to output a memo creator at a remaining region of the screen. Meanwhile, the memo creation support unit 163 may perform a control operation to overlay and output the memo creation on the activation screen of the user function, and adjust transparence of the memo creator. Further, the memo creation support unit 163 may support text and image inputs according to user control.

The memo storage control unit 165 performs a control operation to store a corresponding memo in the memory 150 according to an input control. In this case, the memo creation support unit 163 automatically tags activation information of at least one currently activated user function to a corresponding memo and store the tagged memo.

Here, activation information characteristic of the user function may be changed according to the user control or preset conditions. That is, the activation information of the user function may be a screen or audio information at the time of outputting a memo creator, a screen or audio information at the time of storing the memo, and screens or audio information continuously or distinctly at a predetermined interval from an output time point of the memo creator to a storing time point thereof, or any combination thereof. Further, the activation information of the user function stored in the tagged memo may contain a title of the user function, activation time point of the user function, and information necessary for activation of the user function. In this case, the activation information of the user function stored with the memo may become information including a screen or an audio signal at a certain creating time point of the memo. Further, the activation information of the user function may become a title of the user function and creating time information of the memo according to characteristics of a corresponding user function. For example, when the user function is a moving image playback function, the title of the user function may be a time for activating a corresponding moving image, and time information may be the playback time information of a played moving image at the time of creating the memo. Meanwhile, when the user function is a broadcasting watching function that does not store a separate frame, the title of the user function may become a certain title with respect to a broadcasting screen captured at the time of creating the memo, and the time information may be capture time information of the broadcasting screen.

As illustrated above, a portable terminal 100 supporting a tagged memo function according to an embodiment of the present invention automatically tag activation information of at least one user function being activated at the time of creating a memo to the memo and store the memo. Thereafter, the portable terminal 100 of the present invention may output the activation information of the user function tagged at the time of searching the memo to review and understand memo contents for replay. In this case, when the memo is created in a state that a plurality of user functions is activated, the portable terminal 100 may perform a control operation to collect activation information of a plurality of user functions and to tag corresponding information to the respective memo for storage. The portable terminal 100 may collect only activation information of a certain one user function of a plurality of user functions upon creating the memo. For example, the certain one user function may be an user function outputted a screen on creating the memo, or an user function outputted an audio signal on creating the memo, or an user function having the highest priority of the executed plurality of user functions on creating memo, The portable terminal 100 may then automatically tag the collected activation information of the user function to the memo to store the tagged memo.

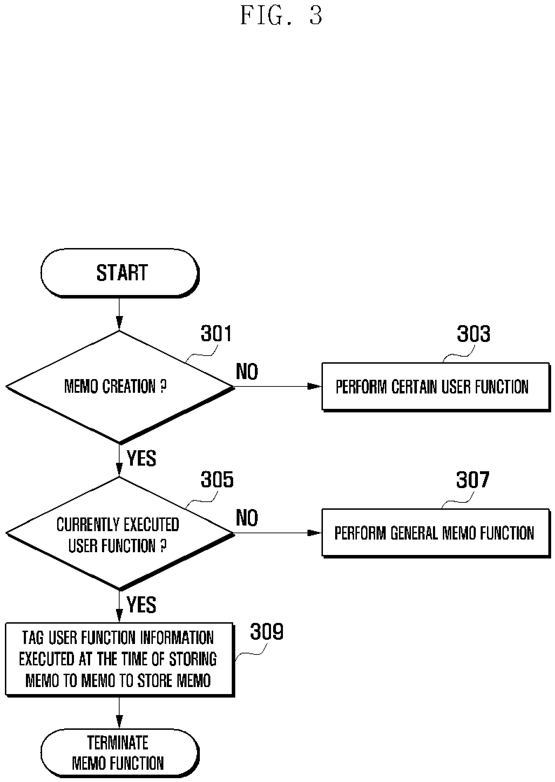

FIG. 3 is a flowchart illustrating a memo creation function according to an exemplary embodiment of the present invention.

Referring to FIG. 3, a controller 160 of a portable terminal 100 may determine whether an input signal for requesting creation of a memo occurs (301). When the input signal is not related to requesting a creation of a memo, the controller 160 may support to perform another user function corresponding to the input signal (303). For example, the controller 160 may activate and support a user function such as a file playback function, a file searching function, a web access function, a call function, or a calendar function according to the input signal.

If the input signal relates to requesting a creation of a memo occurs at step 301, the controller 160 may determine whether there is a currently executed user function (305). When the user function is inactivated, the controller 160 may perform a general memo function (307). That is, the controller 160 may control the display unit 140 to output a memo creator and support writing a text or image according to the user input, and then store the text or image according to storage input control. Here, a memo input to the memory 150 is a memo including only information input by the user without separate additional information.

When there is a currently executed user function at step 305, the controller 160 performs a control operation to tag a user function information executed at the time of storing a memo to the memo for storage (309). To this end, the controller 160 provides a title of a currently executed user function, at least a part of screen information output on the display unit 140 according to the activation of the user function when storing or creating the memo, or between the time of storing the memo and creating the memo, and at least a part of audio information collected through the audio processor 130. Further, the controller 160 may tag at least one of the collected screen information and audio information to the created memo and store the tagged memo.

Meanwhile, the controller 160 may support an update function of the created memo. That is, when the user selects a stored tagged memo, and changes corresponding memo contents, the controller 160 may collect the activation information of the user function activated at the time of changing the memo for update. Here, the controller 160 may perform a control operation to delete previously collected activation information of the user function and tag new activation information of the user function to a corresponding memo for storage. Alternatively, the controller 160 may perform a control operation to tag new activation information of the user function to a corresponding memo and to store the memo without deleting the previously collected activation information of the user function.

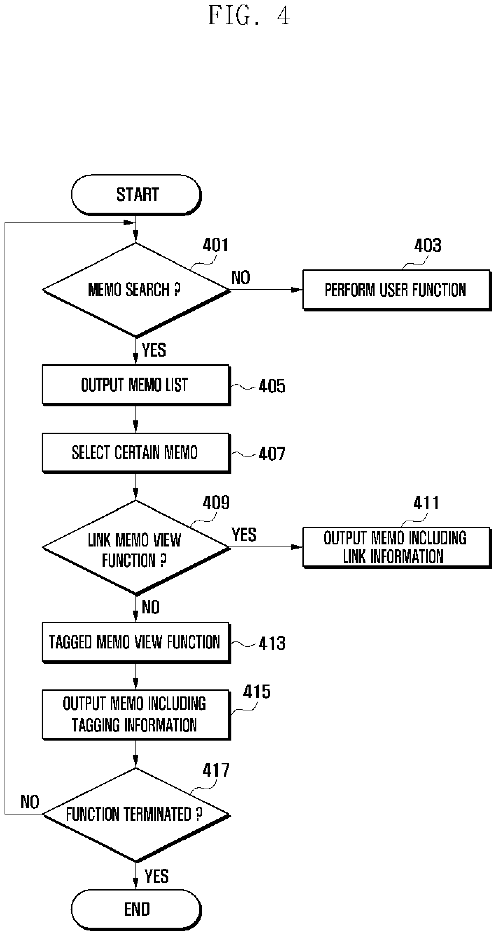

FIG. 4 is a screen sequence diagram illustrating a memo search function during a memo function according to an exemplary embodiment of the present invention.

Referring to FIG. 4, a controller 160 of the portable terminal 100 determines whether an input signal is a signal for searching a memo (401). When the input signal is not the signal for searching the memo, the controller 160 may support to perform a user function according to the input signal (403). For example, the controller 160 controls various functions such as a file playback function, a file search function, a call function, and a game function according to the input signal.

Conversely, when the input signal is for searching the memo, the controller 160 may support to output a memo list (405). To this end, the controller 160 may support to search the tagged memos stored in the memory 150 and to output the searched tagged memos on the display unit 140 in the form of a list or a multi-thumb nail in a predetermined order.

Next, an input unit 120 may generate and transfer an input signal for selecting a certain memo to a controller 160 according to a user control. When the input signal is a signal for terminating a memo search function at step 401, the process may return to step 401 and the controller 160 repeats the foregoing procedures.

When the user creates an input signal for selecting a certain memo among tagged memos at step 407, the controller 409 determines whether a current set state is a link memo view function (409). If so, the controller 160 may control the display unit 140 to output a memo including link information (411). That is, the display unit 140 may output a stored memo on an entire screen to output the link information for viewing the tagged memo at a portion of the screen thereof.

When the current set state is not the memo view function at step 409, the controller 160 may check a tagged memo view function in a current set state (413), and output a memo including tagging information (415). That is, the controller 160 may control the display unit 140 to simultaneously output the memo and activation information of the user function collected at the time of storing the memo.

The foregoing embodiment has illustrated that a link memo and a tagged memo are output differently according to a set state. However, the present invention is not limited thereto. That is, when the link memo is output at step 411 and a user selects link information, step 415 being a tagged memo view function may be performed. Switching to a link memo view screen is possible according to a user request in a state that a tagged memo is output on the display unit 140 according to performing of the tagged memo view function.

Thereafter, the controller 160 determines whether an input signal for determining a function occurs (417). When the input signal for determining a function does not occur, the controller 160 returns to step 401 and repeats the foregoing procedures.

As illustrated above, an operation method according to an embodiment of the present invention may activate a memo and tag the activation information of a user function at the time of activating the memo function to generate a tagged memo for storage. Thereafter, the present invention outputs a stored tagged memo according to a search request of a user in such as way that it outputs a memo including link information, or configures a screen simultaneously outputting tagging information and the memo according to a user request or previous setting.

Hereinafter, various illustrative screen interfaces for supporting the foregoing memo function operation will be described with reference to the accompanying drawings in detail.

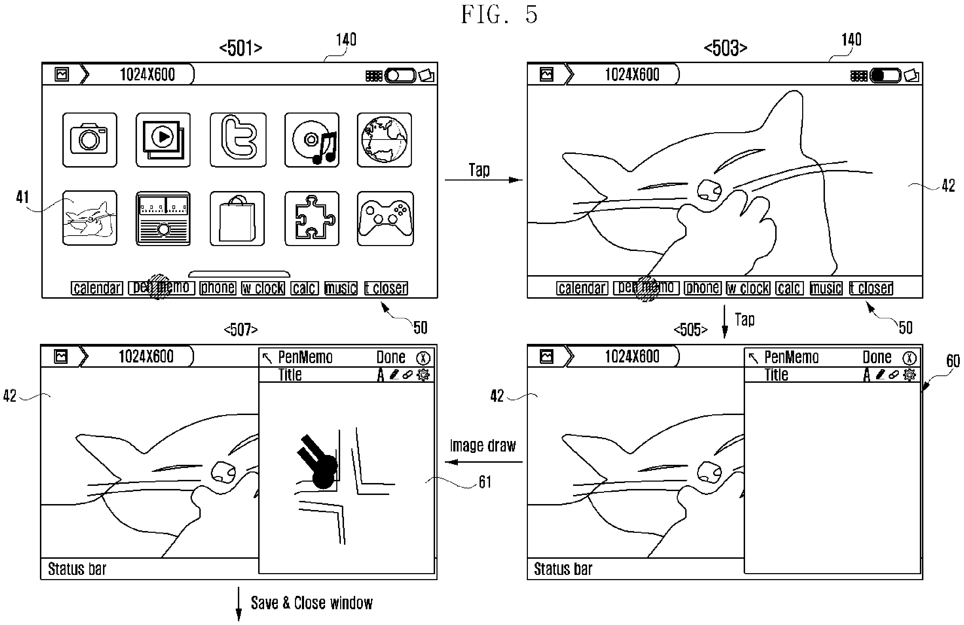

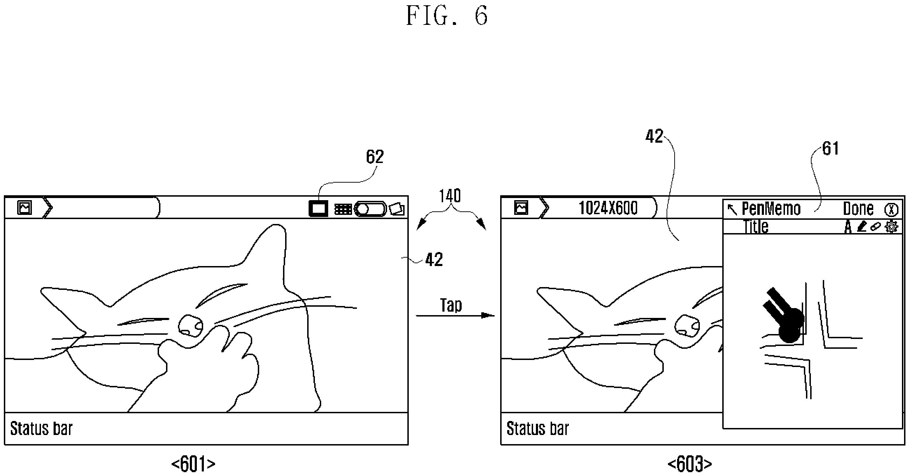

FIG. 5 is a view illustrating an example of a screen interface supporting an operation of a memo function when a user function during an image search function, for example, a photograph search function according to an exemplary embodiment of the present invention. FIG. 6 is a view illustrating an example of a screen interface supporting the searching of a memo created based on the photograph search function.

Referring to FIG. 5, the display unit 140 of the present invention may provide a photograph search function under a user control. That is, if the user creates an input for initiating a photograph search function via the input unit 120, the controller 160 may support to output a screen as illustrated in a screen 501. In response, the display unit 140 may output various photograph items in the form of a thumb nail. Further, the display unit 140 may output an icon region 50 displaying a number of icons including a memo icon for supporting a tagged memo function of the present invention.

In the meantime, when the user selects a first item 41 from various photograph items output in the form of a multi-thumb nail, the display unit 140 may extend and output the first item 41 selected as illustrated in a screen 503 as a first item screen 42. Here, the display unit 140 may output an icon region 50 including a memo icon at a side or a lower part of a screen as in the screen 501. In a state that the first item screen 41 is output on the display unit 140, the user may generate an input signal for selecting a memo icon, for example, a memo icon selection touch event.

Then, the display unit 140 may output a memo creator 60 at a side portion of the screen while the first item screen 42 is being output, as illustrated in a screen 505. In this case, the memo creator 60 may include selection menus such as text input, image input, deletion, environment setting, a storage key, and a release key. When the user wants text input, the user may select a text icon. When a text icon is selected, the controller 160 may output a key map for realizing text inputs on the display unit 140. Further, when the user wants to draw or insert an image, the user may select an image input menu, and in response, the controller 160 may perform a control operation to output a tool such as a pen drawing a line in a memo creator.

Meanwhile, the memo creator 60 may be output in at least a partial region of a display unit 140 on which a first item screen 42 is output. In particular, the memo creator 60 may be overlaid and output at a partial region of an output screen of the first item screen 42, and provide a transparency adjustment according to a user setting. Although not shown, the memo creator 60 may be output not to overlap with the first item screen 42. To this end, the controller 160 resizes the size of the first item screen 42, and arranges the first item screen 42 at a predetermined region of the display unit 140, and performs a control operation to arrange the memo creator 60 at the remaining region.

If the user creates a schedule memo using the memo creator 60, a memo 61 having schedule contents may be generated. To complete creation of the memo 61, the user may generate an input signal for selecting "Done" corresponding to a storage key of the memo creator 60. Then, the memo creator 60 may create the memo and remove it from the display unit 140. When the user performs a storage key input, the controller 160 may collect information of the first item screen 42 related to the activation information of currently activated user function. Further, the controller 160 may perform a control operation to tag information of the first item screen 42 to the created memo 61 and store the tagged memo.

Meanwhile, if a storage of the memo is terminated, the display unit 140 may be restored to a state to output the first item screen 42,as illustrated in a screen 601. At this time, the controller 160 may output a memo alarm icon 62 at a predetermined location to indicate that the created memo exists on a portion of the display unit 140.

When the user selects and activates the memo alarm icon 62, the display unit 140 may output a screen at the time of creating the memo 61, as illustrated in a screen 603. Here, the screen 603 may be substantially the same screen as a screen 507 at the time of creating the memo 61.

Activation information of a user function during an image search function mode may include title information of an image output on the display unit 140, and location information in which the image is stored.

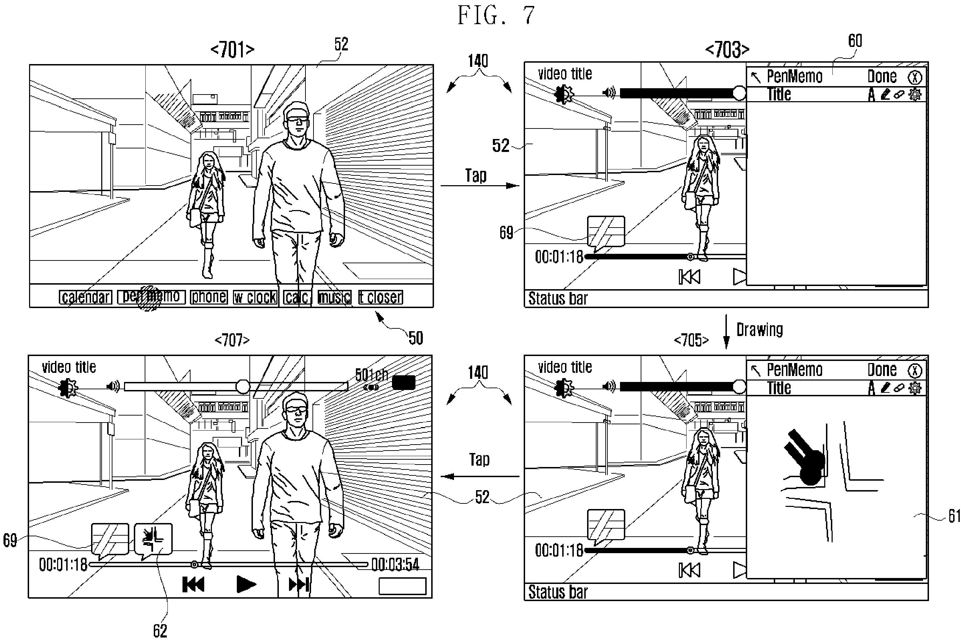

FIG. 7 is a view illustrating an example of a screen interface for supporting the creation of a memo when a user function is a moving image playback function mode according to an exemplary embodiment of the present invention

Referring to FIG. 7, a display unit 140 may provide a moving image playback function according to a user control. That is, when the user creates an input signal for the moving image playback function using an input unit 120, a controller 160 may support to output a screen according to a corresponding input signal, as illustrated in a screen 701. In particular, when the user selects and activates certain moving image contents to create an input signal, the corresponding moving image contents screen 52 may be output on the display unit 140. In this case, the display unit 140 may output an icon region 50 including a memo icon for supporting a memo function of the present invention simultaneously with a screen output according to the playback of a moving image.

In the meantime, when the user selects a memo icon provided at the icon region 50, the display unit 140 may output a memo creator 60 on a moving image contents screen 52, as illustrated in a screen 703. The memo creator 60 may be provided in the same form as the memo creator 60 illustrated in FIG. 5. In the meantime, the display unit 140 may output a first tagged memo 69 previously created in a predetermined region of the moving image contents screen 52. As the memo creator 60 is output according to a selection of the memo icon in the icon region 50, the first tagged memo 69 may be output on the display unit 140.

Meanwhile, the user may write information in a memo creator 60 output on a screen 703 to create a memo 60, as illustrated in a screen 705. If a creation of the memo 61 is terminated, the user may select a "Done" corresponding to a storage key of the memo creator 60. If the "Done" is selected, the display unit 140 may remove a memo 61 from the display unit 140, as illustrated in a screen 707. In this case, the controller 160 collects the activation information of a user function at the time of storing the memo 61. That is, the controller 160 may collect information associated with currently activated moving image contents, for example, the title information of moving image contents and information of the moving image contents screen 52 at the time point of creating the memo 61. If collection of corresponding information is terminated, the controller 160 may automatically tag the collected information to the created memo 61 and store the tagged memo. In this manner, if the tagged memo is created, the controller 160 outputs a first tagged memo 69 and a second tagged memo 62 on a screen to indicate that a tagged memo is included in currently played moving image contents, as illustrated in a screen 707. For example, the first tagged memo 69 and the second tagged memo 62 may be output to a lower region of a screen. The first tagged memo 69 and the second tagged memo 62 may be output on the display unit 140 together with a control key map for controlling a playback of the moving image contents, and be removed from the display unit 140 simultaneously with a removal of the control key map.

The foregoing embodiment has illustrated that the first tagged memo 69 is output when a memo icon is selected from an icon region 50 of a moving image contents playback screen. However, the present invention is not limited thereto. That is, when the user selects and activates a moving image contents item stored in a memory 150, the first tagged memo 69 may output on a screen 701.

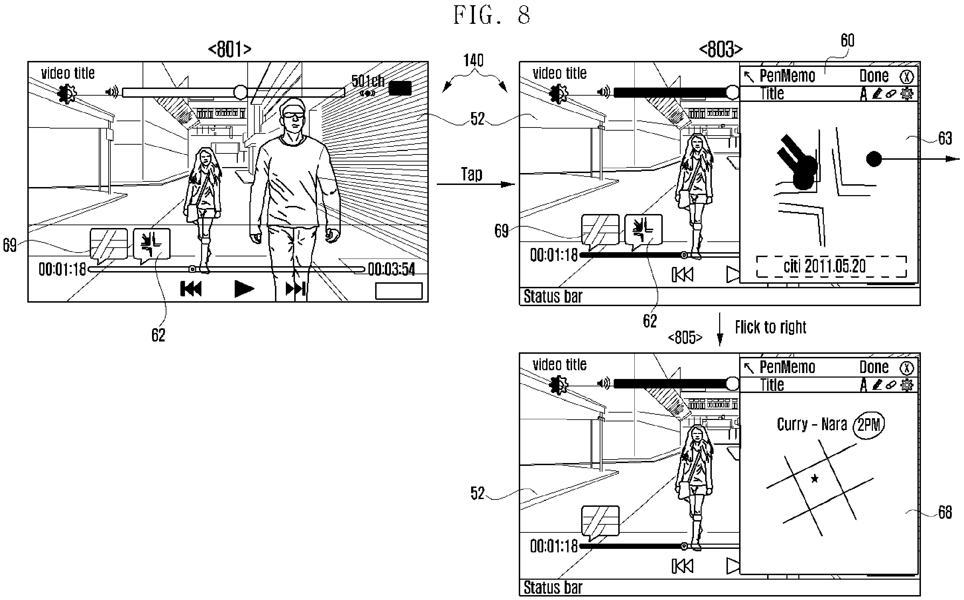

FIG. 8 is a view illustrating another example of a screen for describing a search function mode to which moving image contents are tagged according to an exemplary embodiment of the present invention.

Referring to FIG. 8, the user may create an input signal for selecting a certain moving image content item stored in the memory 150. Then, the controller 160 may control the display unit 140 to output a moving image contents screen 52 corresponding to the moving image contents as illustrated in the screen 801. Simultaneously, the controller 160 may check whether there are tagged memos stored associated with the moving image contents screen 52. As the manner as illustrated in FIG. 7, when the first tagged memo 69 and the second tagged memo 62 are linked with the moving image contents, the controller 160 may output icons indicating that the first tagged memo 69 and the second tagged memo 62 are linked on the moving image contents screen 52. In a state that an icon instructing the first tagged memo 69 and the second tagged memo 62 is output, the user may create an input signal for selecting the second tagged memo 62. Then, the controller 160 may control the display unit 140 to output a moving image contents screen 52 included in the second tagged memo 62, as illustrated in a screen 803, and output the first memo 63 on the screen. A screen 803 configured according to selection of the second tagged memo 62 may be identical with the screen 705 illustrated in FIG. 7. To this end, the controller 160 may check a title of the moving image contents based on information of the second tagged memo 62 to determine what are the moving image contents. The controller 160 may control a certain screen of the corresponding moving image contents to be output based on the information on the moving image contents screen 52 included in the second tagged memo 62, as illustrated in a screen 803. In this case, when the certain screen output on the display unit 140 is configured by a predetermined frame at the time of storing the memo, it may be output in the form of a still image such as a photograph file. Meanwhile, the screen output on the display unit 140 may become information corresponding to a played moving image content screen 52 at the time of creating the first memo 63. Accordingly, if the second tagged memo 62 is selected, the controller 160 may activate the moving image contents and determine which scene is output on the display unit 140 with reference to the screen information. If an output screen of the display unit 140 is determined, the controller 160 may play the moving image contents on a screen corresponding to the screen information in a temporarily stopped form.

In the meantime, in a state that the first memo 63 included in the second tagged memo 62 is output, when the user generates a certain input signal, for example, a left flick touch event on a memo creator 60, the controller 160 may control the display unit 140 to output a screen corresponding to the first tagged memo 69, as illustrated in a screen 805. In this case, a screen corresponding to the first tagged memo 69 may become another screen of the corresponding moving image contents, and the second memo 68 may be output on a scene of the corresponding moving image contents screen 52. As a result, a moving image contents playback screen at the time of creating the first tagged memo 69 may be output on the display unit when activating the first tagged memo 69, and a second memo 68 may be output on a corresponding screen. When the user selects an icon corresponding to a first tagged memo 69 being output on the moving image content screen 52, a screen 805 may be output on the display unit 140.

As illustrated above, when a memo is created during a playback of a moving image, a screen interface for supporting an operation of a memo function of the present invention may store a certain screen information of moving image contents with the created memo to configure a tagged memo. Further, when searching the tagged memo or activating certain moving image contents, the present invention may inform the user of a presence of the tagged memo, and controls the display unit 140 to output a screen at the time of creating the corresponding tagged memo according to a user's selection.

In the meantime, the foregoing embodiment has illustrated that one screen matches with one memo. However, the present invention is not limited thereto. That is, the controller 160 may collect a plurality of playback screens of played moving image contents during a creation of the memo, and then tag a plurality of collected playback screens to a corresponding memo to configure a tagged memo. Accordingly, when a tagged memo including a plurality of playback screens is selected, the controller 160 may support to output a plurality of playback screens arranged using a memo as a background. For example, a plurality of playback screens are resized to have a predetermined size and output in the form of a multi-thumb nail, or alternately output on the display unit in a predetermined order in a sliding or circular way.

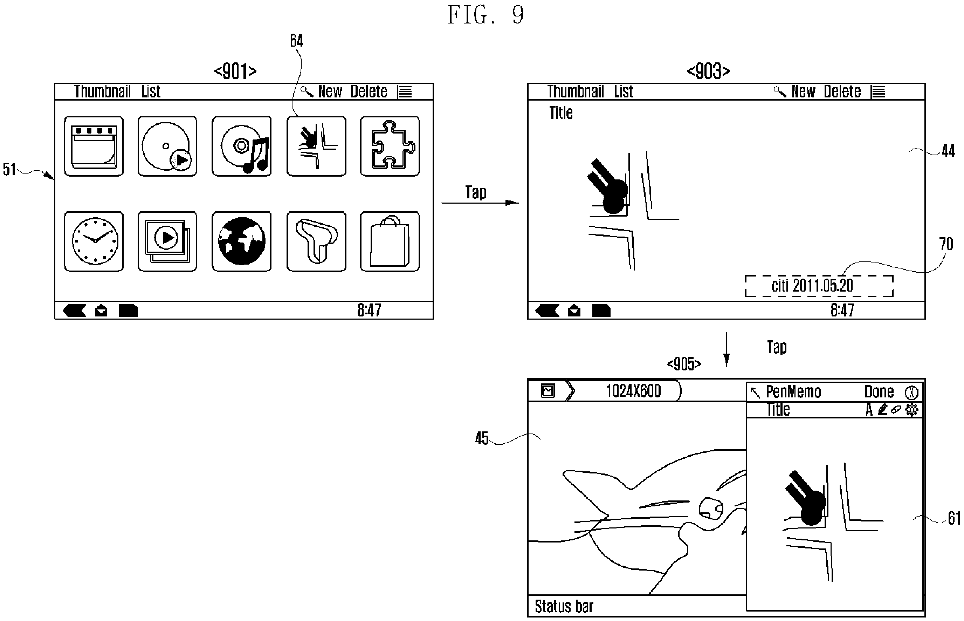

FIG. 9 is a view illustrating a screen interface for describing a tagged memo search function according to an embodiment of the present invention.

Referring to FIG. 9, if the user creates an input signal for operating a tagged memo search function, the display unit 140 may output a tagged memo search screen 51 including tagged memos, as illustrated in a screen 901. To this end, the portable terminal 100 may arrange a menu or an icon for searching a tagged memo on the display unit 140 or allot a certain key button as a hot key for a corresponding function. Tagged memos being output on a screen 901 may be arranged differently according to a schedule priority. For example, the latest created memo may be arranged in a predetermined location based on a time point of creating corresponding memos.

In the meantime, if an input signal for selecting a certain tagged memo 64 is generated on a screen 901, the controller 160 may control the display unit 140 to output a link memo screen 44 corresponding to a selected tagged memo 64, as illustrated in a screen 903. Here, the link memo screen 44 may include a region outputting memo information contained in the tagged memo 64 on an entire screen, and a link information region 70 outputting link information for searching tagging information as a predetermined location.

If the user creates an input signal for selecting the link information region on the screen 903, the controller 160 may control the display unit 140 to simultaneously display a memo 61 and the activation information 45 of a user function collected at the time of creating the tagged memo 64, as illustrated in a screen 905. To this end, the controller 160 performs a control operation to search the activation information of a user function linked to the link information region 70 from the memory 150, activate a user function using the searched information, and output the corresponding tagged memo screen. Here, the activation information 45 of the user function may correspond to an item screen displayed at the time of storing the memo. When corresponding screen information is stored in the link information region 70 separately from a corresponding user function, the controller 160 may output only the stored screen information and control the display unit 140 to output the called screen information together with the memo 61.

Meanwhile, the foregoing embodiment has illustrated that a link memo screen 44 is output if a tagged memo 64 is selected on a screen 901, and the activation information 45 of the user function and the memo 61 are simultaneously output if a link information region 70 is selected from the link memo screen 44. However, the present invention is not limited thereto. That is, if a tagged memo 64 is selected from a screen 901, a portable terminal 100 of the present invention may directly enter a screen 905 without passing through a screen 903.

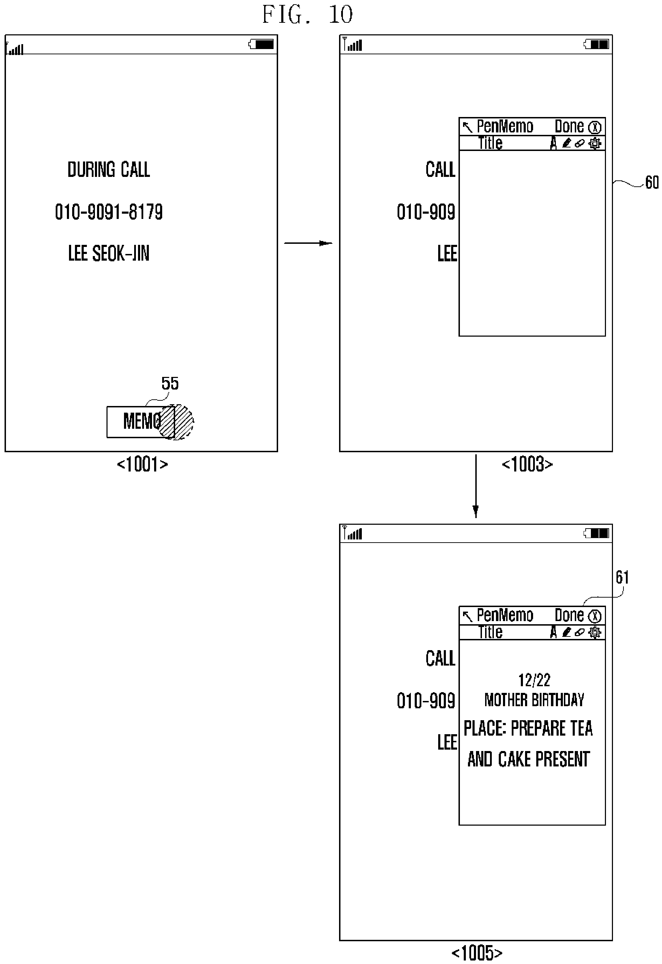

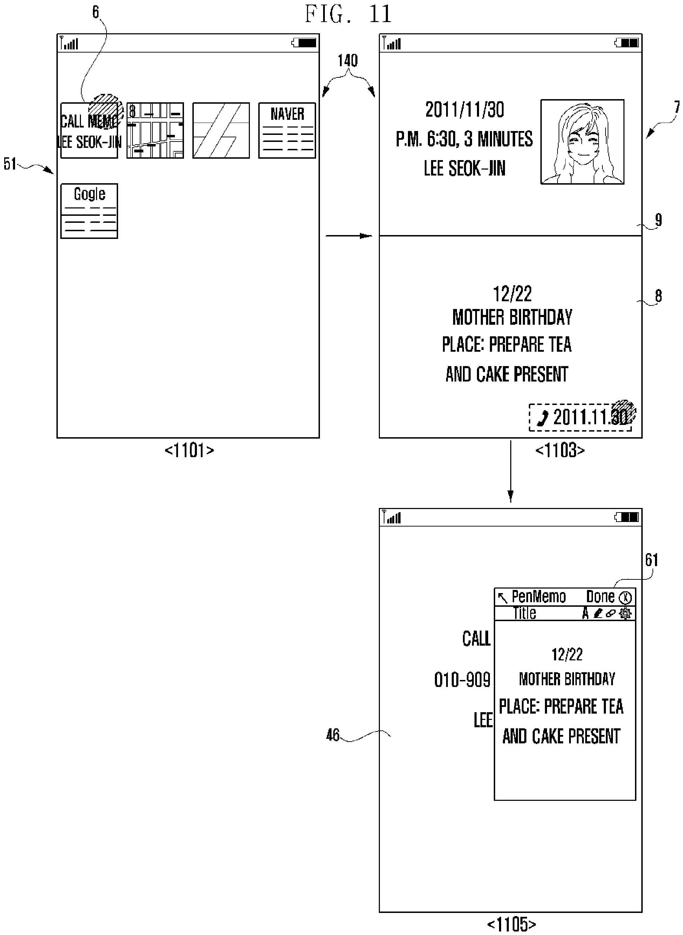

As illustrated above, a memo function operation interface of the present invention may separately provide a tagged memo search screen 51 for searching tagged memos to collectively check and manage a plurality of tagged memos created by the user. In addition, the controller 160 may perform a control operation to output a key capable of deleting respective memos during a screen searching of the tagged memos at a predetermined region of a corresponding memo 61. FIG. 10 is a view illustrating a memo creation function when a user function is a call function according to an exemplary embodiment of the present invention. FIG. 11 is a view illustrating a search function of a tagged memo to which the activation information of a user function is tagged as a call function.

Referring to FIG. 10, a display unit 140 of the present invention may output a screen corresponding to a calling state with another portable terminal, as illustrated in a screen 1001 in response to a user's control. In this case, the display unit 140 may output a memo icon 55 capable of calling a memo creator 60 at a predetermined region of a screen so as to support a memo creation function of the present invention. The user may select a memo icon 55 in a screen state 1001 to attempt the creation of a memo.

Then, the controller 160 may output the memo creator 60 at a side of a screen in a screen state during a call connection, as illustrated in a screen 1003. The memo creator 60 may support the same configuration and function as those of the foregoing memo creator. If the memo creator 60 is called, the user may write certain information to create the memo 61 as illustrated in a screen 1005 using the memo creator 60. If writing of the information is terminated to generate a storage input control, a corresponding memo 61 may be removed from the display unit 140. As a result, if the memo creator 60 and the memo 61 are removed, the display unit 140 may output a screen state during a call connection which is a previous screen state. Meanwhile, the controller 160 may collect information associated with a currently activated user function at the time point of creating the memo 61. In this case, the controller 160 may perform a control operation to capture a currently activated screen during a call connection as the activation information of a user function and to automatically tag the captured screen to a corresponding memo 61 and store the tagged memo.

Furthermore, the controller 160 may perform a control operation to extract a phone number in a currently performed call function as the activation information of the user function, to search phone-book information corresponding to the extracted phone number, and to automatically tag the searched phone-book information to a corresponding memo 61 and then store the tagged memo. In this case, the information tagged to the memo 61 may include a phone number of another terminal, a name, a birthday, an address, and e-mail information recorded in a phone-book according to information recorded in the phone-book, or in any combination thereof.

In the foregoing manner, when the user creates a memo while performing a call connection with another terminal, the portable terminal 100 may automatically tag the current screen information associated with the memo 61 and other information associated with schedule information necessary for performing the user function to a corresponding memo 61 and then store the tagged memo.

Referring to FIG. 11, the user may perform input control for calling a tagged memo search screen 51 to search the tagged memos. That is, the user may activate a certain menu or a key input signal provided from the portable terminal 100 to output a tagged memo search screen 51 including the tagged memos, as illustrated in a screen 1101, on the display unit 140. The user may create an input signal for checking a certain tagged memo 6 where the tagged memo search screen 51 is output. To do this, the user may create a preset touch event on a certain tagged memo 6. Then, the controller 160 may control the display unit 140 to output a link memo screen 7 corresponding to a selected tagged memo 6, as illustrated in a screen 1103. In this case, information output on the link memo screen 7 may contain information stored at the time of storing the memo 61 as well as information included in the created memo. That is, the link memo screen 7 may includea content information region 8 and a tagged phone-book information region 9 of the created memo 61 and a link information region 70 for outputting a tagged memo screen.

If an input signal for activating the link information region 70 is generated on the link memo screen 7, the controller 160 may perform a control operation to simultaneously output the activation information of a user function and the memo 61, as illustrated in a screen 1105, on the display unit 140. In this case, when a tagging memo 6 is selected from the screen 1101, the screen 1105 may be directly output without passing through a screen 1103.

As illustrated above, a memo function operation interface according to an embodiment of the present invention automatically tags the activation information of an activated user function at the time of creating the memo to a created memo and stores the tagged memo for a subsequent retrieval. In the meantime, a user function to which an operation of a memo function of the present invention is applied is not limited to a photo search function, a moving image playback function, and a call function. That is, the user function to which an operation of a memo function of the present invention is applied may include a web search function, a document creation and reading function, a game function, and a calendar function.

In detail, the user may access a web server using the portable terminal 100. Accordingly, the portable terminal 100 may receive a particular web page to be searched from a corresponding web server and output the received web page on the display unit 140. Further, the user may attempt to call a memo creator as illustrated previously to memorize specific information while searching a web page. In this case, when the memo is created and stored, the portable terminal 100 may perform a control operation to collect the web page information when creating the memo as activation information of a user function, and automatically tags the collected web page information to a corresponding memo for storage. In this case, the portable terminal 100 may collect a plurality of web pages according to a user setting. That is, when the user switches a web page during creation of the memo to search various web pages, the portable terminal 100 may perform a control operation to automatically tag all the web pages switched at the time of storing the memo to a corresponding memo and store the tagged memo.

In the meantime, the user may operate a document creation and reading function using the portable terminal 100 and create a memo during the foregoing process. Then, the portable terminal 100 may collect page and line information of at least one currently activated document as the activation information of the user function, and automatically tag the collected information to a corresponding memo and store the tagged memo. In this case, the portable terminal 100 may collect page and line information of all the currently activated documents as the activation information of the user function and automatically tag the collected information to a corresponding memo and store the tagged memo. Accordingly, when a tagged memo created associated with a document is selected for search, the portable terminal 100 may perform a control operation to restrieve all the documents included in the corresponding memo and to output certain lines of a certain page based on stored information on the display unit 140. The portable terminal 100 may collect only page and line information of a document being output on the highest layer of the display unit 140, namely, a document at least a partial region of which being output on the display unit 140 with a memo creator, and tag the collected information to a corresponding memo. In this case, when searching a tagged memo, the portable terminal 100 may call one document tagged to a corresponding memo and output screens of a certain page and a certain line on the display unit 140. Setup for tagging all documents, tagging only one document, or tagging a predetermined number of documents may be changed according to a user's control, and the portable terminal 100 may provide the setting.

The user may operate a game function using the portable terminal 100, and the user may attempt to create a memo during an operation of the game function. To this end, the portable terminal 100 may perform a control operation to switch a current game state to a pause state, and output a memo creator on the display unit 140. Further, if creation of a memo is terminated, the portable terminal 100 may collect information on the progress of a paused game up to now and automatically tag the information to a corresponding memo and store the memo. The user may easily create an attack book of a certain game using the function. In this case, the portable terminal 100 may call a memo creator without pausing the game. Accordingly, the portable terminal may control to collect the game information progressed until the creation of the memo is terminated, and tag the game information to a corresponding memo. Further, the user may arrange various schedules based on a calendar function provided from the portable terminal 100. In this case, the user may perform a control operation to activate a memo function while operating a calendar function. Then, the portable terminal 100 may perform a control operation to output a memo creator at a predetermined region of the display unit 140 in a state that a calendar screen is output on the display unit 140. Further, if creation of the memo is terminated, the portable terminal 100 may tag the date information of a calendar indicated at a time of creating the memo and information included in a corresponding date to the created memo and then store the tagged memo. Further, the portable terminal 100 may add a current date indicated in a corresponding calendar to the created memo and store the added memo.

Thereafter, the user may check a calendar to check that there is a memo created at a certain date. To this end, the portable terminal 100 may provide a schedule index to a corresponding data to distinguish a date with a memo from other dates on a calendar screen. When a tagged memo in which the activation information of a user function is created with a calendar function is searched, the portable terminal 100 may perform a control operation to activate a calendar function based on the information tagged to the corresponding memo and output a screen corresponding to a created date of the memo. Further, the portable terminal 100 may activate and output the created memo on the display unit 140, and then provide a corresponding memo edit function according to user control.

As mentioned above, a memo function of the present invention supports to manage all tagged memos, informs tagged memos stored associated with a corresponding user function at the time of activating respective user functions to easily restrieve and manage memos created by the user.

The foregoing portable terminal 100 may further include various additional modules according to provision forms. That is, when the portable terminal 100 is a communication terminal, it may include constructions that are not mentioned such as a near distance communication module for near distance communication, an interface exchanging data in a wired communication scheme or a wireless communication scheme of the mobile terminal 100, an Internet communication module communicating with an Internet to perform an Internet function, and a digital broadcasting module receiving and broadcasting digital broadcastings. Since the structural elements can be variously changed according to convergence trend of a digital device, no elements can be listed. However, the portable terminal 100 may include structural elements equivalent to the foregoing structural elements. Further, the terminal 100 of the present invention may be substituted by specific constructions in the foregoing arrangements according to the provided form or another structure. This can be easily understood to those skilled in the present art.

Further, the mobile terminal 100 according to an embodiment of the present invention may include various types of device having a communication module capable of performing data communication. For example, the portable terminal 100 may include an information communication device and a multimedia device such as a Portable Multimedia Player (PMP), a digital broadcasting player, a Personal Digital Assistant (PDA), a music player (e.g., MP3 player), a portable game terminal, a Smart Phone, a notebook computer, and a handheld PC as well as various mobile communication terminals corresponding to various communication systems.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A method for providing a memo function in a portable terminal (100), **characterized by**:
activating at least one user function supported from the portable terminal(100);
creating a memo in a state that the at least one user function is activated; and
tagging an activation information corresponding to the at least one user function including at least one of screen information, audio information, and user function relation information that is output according to the activation to the created memo and storing the tagged memo.

2. The method of claim 1, further comprising:
receiving an input signal for searching the tagged memo; and
outputting a link information with the activation information and corresponding the at least one of the screen information, the audio information and the user function relation information in response to the input signal.

3. The method of claim 1, further comprising:
receiving an input signal for searching the tagged memo; and
simultaneously outputting the activation information of the user function and the tagged memo in response to the input signal;
activating a user function corresponding to the activation information of the user function; and
controlling the user function to output a screen image that matches an image at the time of creation of the memo.

4. The method of claim 1, further comprising outputting an icon indicating presence of the tagged memo on a screen according to activation of a certain user function.

5. The method of claim 4, further comprising
simultaneously outputting the activation information of the user function and information included in the tagged memo on a display unit when the icon is selected; and
simultaneously outputting link information identifying a source of the tagged memo and outputting the content of the tagged memo when the link information is selected when the icon is selected.

6. The method of claim 5, further comprising updating the link information.

7. The method of claim 1, further comprising outputting a tagging memo search screen having the tagged memo in the form of a list or a multi-thumb nail;
simultaneously outputting the activation information of the user function and corresponding the at least one of the screen information, the audio information, and the user function relation information in the tagged memo in response to an input signal requesting a particular tagged memo;
outputting link information identifying a source of the particular tagged memo and outputting the content of the tagged memo when the link information is selected.

8. The method of claim 1, **characterized in that** the activation information of the user function comprises one of:
(1) the screen information during a call connection and a number of called terminal when creating the memo,
(2) at least one frame at a start time of creating the memo, at a time of storing the tagged memo, and between the start time and the time of storing the memo during a moving image function mode,
(3) at least one of executed web page information when creating the memo, at least one web page information switched when a page is switched between the start time of creation of the memo and the time of storage of the memo, or web page information output on a display unit during a web access function mode,
(4)a page of a document output on the display unit just before creating the memo and line information output on the display unit showing all currently activated documents, during a document function,
(5) schedule information of a currently designated date during a calendar function mode,
(6) title information of a photograph output on the display unit and location information of the photograph stored in a memory during an image search function, and
(7) game progress information between the start time of creation of the memo and the time of storage of the memo during a game function mode.

9. The method of claim 1, **characterized in that** the activation information of the user function further comprises:
title information of the user function;
activation screen information of the user function acquired in at least one of a start time of creation of the memo, a time of storage of the memo, and time therebetween; and
a time information when the user function is activated.

10. A portable terminal (100) for providing a memo function, **characterized by**:
a memory (150)for storing at least one user function;
a display unit (140)for outputting screen information according to an activation of the at least one user function;
an input unit (120)for generating an input signal corresponding to a function call for creating a memo in a state that the screen information is output; and
a controller (160)performing a control operation to tag an activation information of the at least one user function including at least one of a screen information, an audio information, and a user function information that is output according to the activation to the created memo and to store the tagged memo.

11. The portable terminal of claim 10, **characterized in that** the display unit (140)outputs at least one of:
a screen including a link information including the at least one of the screen information, the audio information and the user function information corresponding the activation information of the user function during a memo search mode;
a screen simultaneously outputting the activation information of the user function the tagged memo during the memo search mode; and
an icon indicative of a presence of the tagged memo.

12. The portable terminal of claim 13, **characterized in that** the controller (160)performs a control operation to simultaneously output the activation information of the user function and the tagged memo on the display unit(140) when the icon is selected, and to
simultaneously output link information of the tagged memo when the icon is selected, wherein the controller (160)further performs a control operation to update the link information.

13. The portable terminal of claim 10, **characterized in that** the display unit (140)outputs at least one pf:
a tagging memo search screen displaying the tagged memo in the form of a list or a multi-thumb nail;
a screen simultaneously outputting information of the tagged memo and the activation information of the user function included in the tagged memo during a memo search mode; and
a screen outputting link information including information of the tagged memo and the activation information of the user function included in the tagged memo.

14. The portable terminal of claim 10, **characterized in that** the activation information of the user function comprises one of:
(1) the screen information during a call connection and a number of called terminal when creating the memo;
(2) at least one frame at a start time of creating the memo, at a time of storing the tagged memo, and time therebetween during a moving image function model;
(3) at least one of executed web page information when creating the the memo, at least one web page information switched when a page is switched between the start time of creating the memo and the time of storing the memo, or web page information output on a display unit during a web access function mode;
(4)a page of a document output on the display unit just before creating the memo and a line information output on the display unit showing all currently activated documents, during a document function;
(5) schedule information of a currently designated date during a calendar function mode;
(6) title information of a photograph output on the display unit and a location information of the photograph stored in a memory during an image search function, and
(7) game progress information between the start time of creating the memo and the time of storing the memo during a game function mode.

15. The portable terminal of claim 10, **characterized in that** the activation information of the user function further comprises:
title information of the user function;
activation screen information of the user function acquired in at least one of a start time of creating the memo, a time of storing the memo, and between the start time of creating the memo and the time of storing the memo; and
time information when the user function is activated.
